# EUROPEAN PATENT SPECIFICATION

(11) **EP 2 159 634 B1**
(45) Date of publication and mention of the grant of the patent: **24.08.2011**
(21) Application number: 09168594.1
(22) Date of filing: 25.08.2009
(51) Int. Cl.: G02F 1/39, G02F 1/35

(54) **Terahertz-wave optical generating apparatus**
Optische Vorrichtung zur Erzeugung von Licht im Terahertz-Frequenzbereich
Dispositif optique de génération d'onde dans le domaine térahertz

(30) Priority: 26.08.2008 JP 2008217050
(43) Date of publication of application: 03.03.2010
(73) Proprietor: AISIN SEIKI KABUSHIKI KAISHA, Kariya-shi, Aichi 448-8650 (JP)
(72) Inventor: Ohtake, Hideyuki, Kariya-shi Aichi 448-8650 (JP); Ichikawa, Yuki, Kariya-shi Aichi 448-8650 (JP); Uehara, Yuzuru, Kariya-shi Aichi 448-8650 (JP); Tanaka, Koichiro, Kyoto-shi Kyoto 606-8501 (JP); Nagai, Masaya, Kyoto-shi Kyoto 606-8501 (JP)
(74) Representative: TBK

(56) References cited:
- EP-A- 1 717 634
- KOMINE H ET AL: "QUASI-PHASE-MATCHED SECOND-HARMONIC GENERATION BY USE OF A TOTAL- INTERNAL-REFLECTION PHASE SHIFT IN GALLIUM ARSENIDE AND ZINC SELENIDE PLATES" OPTICS LETTERS, OSA, OPTICAL SOCIETY OF AMERICA, WASHINGTON, DC, US, vol. 23, no. 9, 1 May 1998 (1998-05-01), pages 661-663, XP000755365 ISSN: 0146-9592 -& US 5 640 480 A (KOMINE HIROSHI [US]) 17 June 1997 (1997-06-17)
- RAYBAUT MYRIAM ET AL: "Nonlinear reflection effects on Fresnel phase matching" APPLIED PHYSICS LETTERS, AIP, AMERICAN INSTITUTE OF PHYSICS, MELVILLE, NY, US, vol. 92, no. 12, 28 March 2008 (2008-03-28), pages 121112-121112, XP012106104 ISSN: 0003-6951
- RAYBAUT M ET AL: "A guided wave approach to Fresnel Phase Matching: Application to parametric oscillation and terahertz-wave generation" LASERS AND ELECTRO-OPTICS AND 2006 QUANTUM ELECTRONICS AND LASER SCIENCE CONFERENCE. CLEO/QELS 2006. CONFERENCE ON, IEEE, PISCATAWAY, NJ, USA, 21 May 2006 (2006-05-21), pages 1-2, XP031394479 ISBN: 978-1-55752-813-1
- L'HUILLIER J A ET AL: "Generation of THz radiation using bulk, periodically and aperiodically poled lithium niobate - Part 2: Experiments" APPLIED PHYSICS B ; LASERS AND OPTICS, SPRINGER, BERLIN, DE, vol. 86, no. 2, 13 December 2006 (2006-12-13), pages 197-208, XP019473385 ISSN: 1432-0649
- SERKLAND D ET AL: "CW optical parametric oscillation near 2.1 /spl mu/m, pumped by 1064 nm" LASERS AND ELECTRO-OPTICS SOCIETY ANNUAL MEETING, 1993. LEOS '93 CONFE RENCE PROCEEDINGS. IEEE SAN JOSE, CA, USA 15-18 NOV. 1993, NEW YORK, NY, USA,IEEE, 15 November 1993 (1993-11-15), pages 105-106, XP010129277 ISBN: 978-0-7803-1263-0
- DATABASE INSPEC [Online] THE INSTITUTION OF ELECTRICAL ENGINEERS, STEVENAGE, GB August 1969 YARBOROUGH J M ET AL: 'Efficient, tunable optical emission from LiNbO3 without a resonator' Database accession no. 76751 & J. M. YARBOROUGH ET AL.: "Efficient, tunable optical emission from LiNbO3 without a resonator", APPLIED PHYSICS LETTERS USA, vol. 15, no. 3, 1 August 1969 (1969-08-01) , pages 102-105, ISSN: 0003-6951

## Description

The present invention relates to a terahertz wave generating apparatus for generating high-intensified terahertz waves.
Prior art which is related to this field of technology can be found e.g. in document KOMINE H ET AL: "Quasi-phase-matched second-harmonic.generation by use of a total-internal-reflection phase shift in gallium arsenide and zinc selenide plates", OPTICS LETTERS, OSA, OPTICAL SOCIETY OF AMERICA, WASHINGTON, DC, US, vol. 23, no. 9, 1 May 1998 (1998-05-01), pages 661-663, document US 5,640,480 A disclosing a zig-zag quasi-phase-matched wavelength converter apparatus, document EP 1 717 634 A1, on which the preamble of the appended claim 1 is based, disclosing wave generation by compensation of wave propagation phase shift in a nonlinear optical medium, document RAYBAUT MYRIAM ET AL: "Nonlinear reflection effects on Fresnel phase matching", APPLIED PHYSICS LETTERS, AIP, AMERICAN INSTITUTE OF PHYSICS, MELVILLE, NY, US, vol. 92, no. 12, 28 March 2008 (2008-03-28), pages 121112-121112, document RAYBAUT M ET AL: "A guided wave approach to Fresnel Phase Matching: Application to parametric oscillation and terahertz-wave generation", LASERS AND ELECTRO-OPTICS AND 2006 QUANTUM ELECTRONICS AND LASER SCIENCE CONFERENCE. CLEO/QELS 2006. CONFERENCE ON, IEEE, PISCATAWAY, NJ, USA, 21 May 2006 (2006-05-21), pages 1-2, document L'HUILLIER J A ET AL: "Generation of THz radiation using bulk, periodically and aperiodically poled lithium niobate - Part 2: Experiments", APPLIED PHYSICS B; LASERS AND OPTICS, SPRINGER, BERLIN, DE, vol. 86, no. 2, 13 December 2006 (2006-12-13), pages 197-208, and document SERKLAND D ET AL: "CW optical parametric oscillation near 2.1 µm, pumped by 1064 nm", LASERS AND ELECTRO-OPTICS SOCIETY ANNUAL MEETING, 1993. LEOS '93 CONFERENCE PROCEEDINGS. IEEE SAN JOSE, CA, USA 15-18 Nov. 1993, NEW YORK, NY, USA, IEEE, 15 November 1993 (1993-11-15), pages 105-106.

Terahertz waves are electromagnetic waves having frequency in a range between 0.1 and 10THz and having wavelength in a range between 30 and 3000µm, which approximately correspond to a range between a microwave band and a light. Taking advantage of this characteristic, the terahertz wave has been expected to be applied to various areas such as telecommunication, examination and the like.

A device and a method for generating terahertz waves are disclosed in a non-patent document 1: Kiyomi Sakai "terahertz time-domain spectroscopy (THz-TDS)", spectroscopy kenkyu, Vol. 50, No. 6, 2001, p.261-273, and a non-patent document 2: Hoffman et al., "Efficient terahertz generation by optical rectification at 1035 nm", OPTICS EXPRESS, Vol. 15, No. 18, 3 September 2007, pp.11706-11713.

In the non-patent document 1, several technologies for generating terahertz waves are disclosed. As one example, a terahertz wave is generated by use of an antenna element such as a voltage- biased antenna having a micro antenna structure. Specifically, the terahertz wave is generated by using the antenna irradiated with an ultra short pulse laser. As another example, a terahertz wave is generated on the basis of a nonlinear effect. Specifically, the terahertz wave is generated on the basis of light rectification effect by using a certain material having a reversal symmetry _{X}(2) irradiated with ultra short pulse laser. Furthermore, a surface semiconductor and an application of magnetic field are used in order to generate the terahertz wave.

In the non-patent document 2, a technology for generating high-intensified terahertz waves, on the basis of the Cherenkov radiation theory, within LN(LiNbO₃ : lithium niobate) crystal, in such a way that wavefront of an incident laser is tilted by use of diffraction grating, is disclosed.

According to the non-patent document 1, because the intensity of the obtained terahertz wave (output) is relatively low, such terahertz wave may not be used for areas other than spectroscopic measurement.

Further, according to the non-patent document 2, because the wavefront of the incident laser needs to be tilted, an optical system for propagating a beam image focused on the diffraction grating, by use of the diffraction grating and a lens, is used. In this configuration, the light tilted at the diffraction grating may be dispersed at areas other than the vicinity of the focal point of the lens, accordingly, a positional alignment of the optical system needs to be adjusted very precisely.

A need thus exists for a terahertz wave generating apparatus by which a high-intensified terahertz wave is generated by a simple structure.

According to the present invention, this need is satisfied by a terahertz wave generating apparatus as defined in the appended claims.

The present invention will become more apparent from the following detailed description considered with the reference to the accompanying drawings, wherein:

Fig. 1 illustrates a configuration diagram of a terahertz wave generating apparatus of an embodiment related to the present invention; and

Fig. 2 illustrates a diagram for explaining interactions between an excitation light anda terahertz wave.

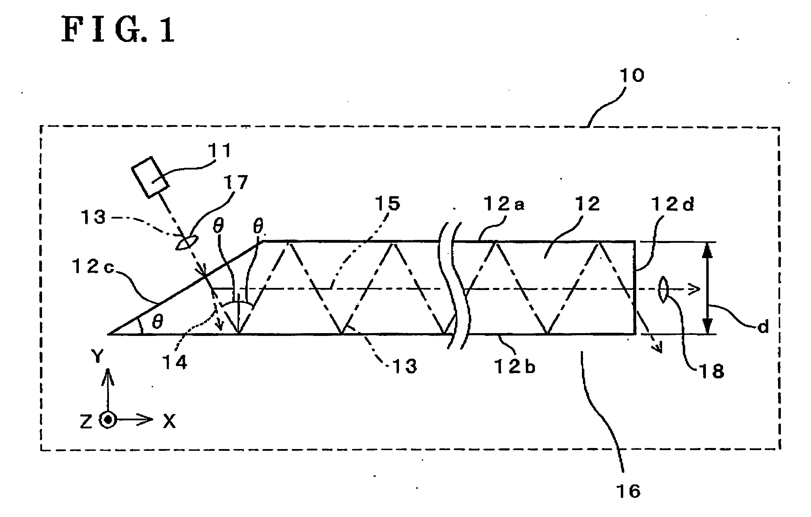

A terahertz wave generating apparatus related to the present invention will be explained in accordance with a drawing in Fig. 1. The drawing of Fig. 1 illustrates a configuration of the terahertz wave generating apparatus of an embodiment. The terahertz wave generating apparatus in the embodiment is mounted to an imaging examination apparatus or the like which uses terahertz waves.

Fig. 1 illustrates a terahertz wave generating apparatus 10 in the embodiment including an excitation light source 11, a nonlinear optical crystal 12 and optical systems 17 and 18.

The excitation light source 11 is a semiconductor laser equipment serving as a light source for emitting an excitation light 13 serving as a toward the nonlinear optical crystal 12 serving as an optical crystal. In the embodiment, the excitation light 13 is set at 780 nm of its wavelength, and a polarization direction of the excitation light 13 is set so as to be parallel to an axis Z in Fig. 1.

The nonlinear optical crystal 12 generates terahertz waves by process of an optical parametric generation on the basis of a nonlinear optical principle for an incident light such as a laser light. In the embodiment, LN (LiNbO₃ : lithium niobate) crystal is used as the nonlinear optical crystal 12, and an optic axis of the nonlinear optical crystal 12 is in parallel with the axis Z in Fig. 1.

As illustrated in Fig. 1, the nonlinear optical crystal 12 is formed in a plate shape (e.g., plate like body) whose thickness is "d" (µm). The thickness "d" is set so as to fulfill a condition where the terahertz wave 15 propagates within the nonlinear optical crystal 12 in a single mode and fulfill a phase matching condition for the optical parametric amplification between the excitation light 13 and the terahertz wave 15. The thickness "d" of the nonlinear optical crystal 12 in the embodiment is set to 100µm.

The nonlinear optical crystal 12 includes an incident plane 12c (e.g., a tapered surface) through which the excitation right 13 enters the nonlinear optical crystal 12. The incident plane 12c is formed so as to form an angle θ between the incident plane 12c and principle surfaces (total reflection planes 12a and 12b formed parallel to each other) of the nonlinear optical crystal 12. The angle θ is set so as to fulfill a condition where the excitation light 13 is total-reflected on the total reflection planes 12a and 12b. In the embodiment, the angle θ is set to 30°, and an exit plane 12d through which the excitation light 13 and the terahertz wave 15 exit the nonlinear optical crystal 12 is formed so as to be vertical relative to each of the total reflection planes 12a and 12b.

Because the wavelength of the excitation light 13 is different from that of the terahertz wave 15, the excitation light 13 and the terahertz wave 15 propagate within the nonlinear optical crystal 12 at different speeds. In the embodiment, the propagation speed of the terahertz wave 15 is set so as to be a half of the propagation speed of the excitation light 13.

In this configuration, the nonlinear optical crystal 12, serving as a core, and air 16, serving as a clad, configure an optical waveguide.

The optical system 17 is an optical system such as a lens provided between the excitation light source 11 and the nonlinear optical crystal 12. The optical system 17 is illustrated in the diagram of Fig. 1 in a simplified manner, however, another optical system may be used in stead of the optical system 17 depending on the configuration of the terahertz wave generating apparatus or an examination apparatus to which the terahertz wave generating apparatus is mounted.

Only main components of the terahertz wave generating apparatus 10 are explained above and illustrated in the diagram in Fig. 1 for the sake of convenience, however, other parts such as a casing may be provided at the terahertz wave generating apparatus 10.

An actuation of the terahertz wave generating apparatus 10 structured as mentioned above will be explained.

As illustrated in the drawing In Fig. 1, when the excitation light source 11 emits the excitation light 13 toward the incident plane 12c of the nonlinear optical crystal 12, the excitation light 13 vertically enters the nonlinear optical crystal 12 through the incident plane 12c.

The excitation light 13 entering the nonlinear optical crystal 12 generates an idler wave 14 and a terahertz wave 15 by process of optical parametric generation. On the basis of law of conservation of energy, a relation among an angular frequency of the excitation light 13 (ω1), an angular frequency of the idler wave 14 (w2) and an angular frequency of the terahertz wave 15 (ω3) is expressed by a formula: ω1=ω2+ω3. Further, on the basis of law of conservation of momentum. a relation among a light vector of the excitation light 13 (k1), a light vector of the idler wave 14 (k2) and a light vector of the terahertz wave 15 (k3) is expressed by a formula: k1=k2+k3.

Then, the excitation light 13 is total-reflected on the total reflection planes 12a and 12b, each of which configures principle surfaces of the nonlinear optical crystal 12. Because a refractive index of LN crystal used for the nonlinear optical crystal 12 is set to 2.15, and a refractive index of the air is 1.0003, the optical waveguide fulfills a condition of the total reflection of the excitation light 13 at an angle θ of 30°. Accordingly, the excitation light 13 propagates within the nonlinear optical crystal 12 by repeating several times the total reflections on the total reflection planes 12a and 12b at the incident angle θ of 30°.

The terahertz wave 15 propagates within the nonlinear optical crystal 12 at a single mode in a direction indicated by an arrow illustrated in the diagram in Fig. 1.

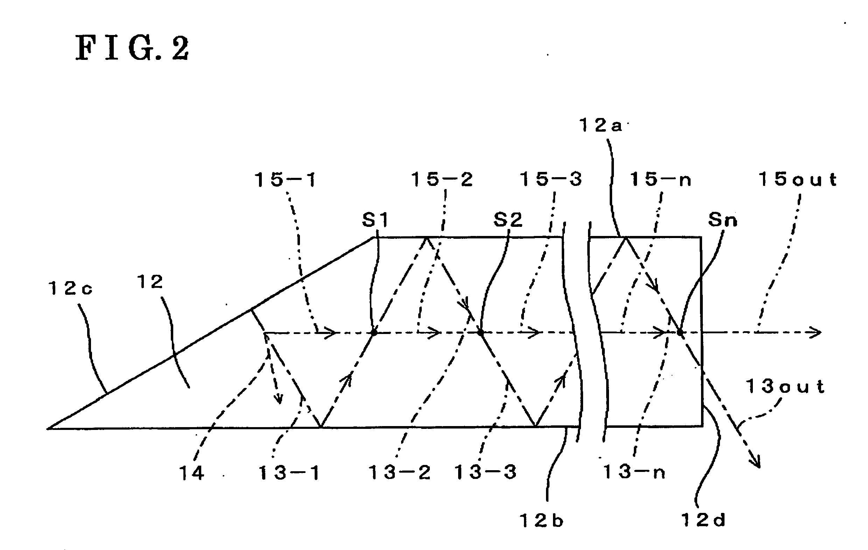

A relationship between the excitation light 13 and the terahertz wave 15 will be explained in detail in accordance with the drawing of Fig. 2. In Fig. 2, the excitation light 13 is indicated by numerals of 13-1,13-2,···, 13-n (n=positive integer) and 13out in its propagation order, and the terahertz wave 15 is indicated by numerals of 15-1,15-2,···, 15-n (n=positive integer) and 15out in its propagation order. Points S1, S2 and Sn (n=positive integer) each indicates an imaginary point at which the excitation light 13 and the terahertz wave 15 interact with each other.

After entering the nonlinear optical crystal 12 through the incident plane 12c and generating the terahertz wave 15 and the idler wave 14, the excitation light 13-1 propagates toward the total reflection plane 12a after being total-reflected on the total reflection plane 12b. The terahertz wave 15 generated within the nonlinear optical crystal 12 is propagated in the direction indicated by an arrow in Fig. 2.

As indicated in the drawing of Fig. 2, because the excitation light 13-1 and the terahertz wave 15-1 form an equilateral triangle, and because the propagation speed of the terahertz wave 15 within the nonlinear optical crystal 12 is half of the propagation speed of the excitation light 13 within the nonlinear optical crystal 12, the excitation light 13-1 and the terahertz wave 15-1 reach the point S1 at the same time.

Then, an interaction between the excitation light 13-1 and the terahertz wave 15-1 occurs at the point S1. A phase matching condition of the optical parametric amplification between the excitation light 13 and the terahertz wave 15 is fulfilled in this interaction. Accordingly, the terahertz wave 15-1 is optical-parametrically amplified to be the terahertz wave 15-2, which has an intensity that is higher than the intensity of the terahertz wave 15-1, and the amplified terahertz wave 15-2 is further propagated within the nonlinear optical crystal 12. On the other hand, the intensity of the excitation light 13-1 is reduced by the amplification of the terahertz wave 15-1 so as to be the excitation light 13-2, whose intensity is lower than that of the excitation light 13-1, and the excitation light 13-2 is further propagated within the nonlinear optical crystal 12.

The excitation light 13-2 total-reflected on the total reflection plane 12a and the terahertz wave 15-2 interact with each other at the point S2 repetitively, so that the terahertz wave 15-2 is amplified to be the terahertz wave 15-3, and the intensity of the excitation light 13-2 is reduced so as to be an excitation light 13-3 whose intensity is lower than that of the excitation light 13-2.

After "n" times of the interaction (at the point Sn), the terahertz wave 15 has been amplified by the excitation light 13 "n" times so as to be the terahertz wave 15out, whose intensity is relatively highest, and the terahertz wave 15out exits the nonlinear optical crystal 12 through the exit plane 12d. An object to be examined is irradiated with the outputted terahertz wave 15oust in order to obtain, for example image information of the object, by means of a detecting means of the examination apparatus.

The intensity of the excitation light 13 has been reduced so as to be the excitation light 13out, whose intensity is relatively the lowest, and exits the nonlinear optical crystal 12 through the exit plane 12d. The outputted excitation light 13out and the Idler wave 14 are absorbed by an absorving apparatus or the like.

Because the positive integer "n" is increased in accordance with the size of the nonlinear optical crystal 12 in a propagation direction, the intensity of the terahertz wave 15 may be appropriately increased depending on the size of the nonlinear optical crystal 12 by means of the interaction between the terahertz wave 15 and the excitation light 13. However, because the intensity of the excitation light 13 is reduced by repeating the amplification of the terahertz wave 15, the excitation light 13 is fogged as the propagation thereof proceeds. Therefore, the size of the nonlinear optical crystal 12 in the propagation direction may be set appropriately in consideration with the intensity of the excitation light 13 entering the nonlinear optical crystal 12.

In the embodiment, the total reflection of the excitation light is repeated within the nonlinear optical crystal 12, which configures the optical waveguide, at the same time, the terahertz wave generated within the nonlinear optical crystal by process of the optical parametric generation interacts with the excitation light so as to fulfill the phase matching condition of the optical parametric amplification. Accordingly, using a single excitation light, the terahertz wave may be parametrically amplified several times, in other words, a terahertz wave with high intensity may be generated by a device whose configuration is relatively simple.

The terahertz wave generating apparatus in the embodiment may be modified or may be applied to another apparatus.

For example, in the embodiment, the angle θ indicated in the drawing of Fig. 1 is set to 30°, however, the angle θ may be modified as long as a condition where the excitation light 13 is total-reflected is fulfilled, and a condition where the phase matching condition between the excitation light 13 and the terahertz wave 15 is also fulfilled. Further, types of the excitation light 13 and the nonlinear optical crystal 12 may be changed in the same manner as the angle θ.

Further, in the embodiment, the optical waveguide is comprised of the nonlinear optical crystal 12 serving as a core and the air 16 serving as clad, however, the medium may be changed, regardless of vapor or solid substance, as long as it fulfills the condition for the total reflection of the excitation light 13.

In the embodiment, the terahertz wave generating apparatus 10 is mounted to an imaging examination apparatus, however, the device may be applied to another apparatus such as a spectroscopic measurement apparatus, a telecommunication apparatus, a chemical analysis apparatus and the like.

As described a terahertz wave generating apparatus includes an excitation light source for outputting an excitation light at a predetermined wavelength, an optical crystal being excited by an irradiation with the excitation light in order to generate a terahertz wave and terahertz wave amplifying means for repeatedly performing an optical parametric amplification for the terahertz wave by use of the excitation light, wherein the terahertz wave amplifying means includes an optical waveguide having the optical crystal serving as a core and a medium serving as a clad whose refractive index is smaller than a refractive index of the optical crystal, and the inputted excitation light is propagated within the optical waveguide with fulfilling a condition for a total reflection.

Further, the optical crystal is formed in a plate shape body having a predetermined thickness and having first and second principle surfaces formed so as to be parallel to each other and a tapered surface, a predetermined angle is set between each of the first and second principle surfaces and the tapered surface, the excitation light vertically enters the optical crystal through the tapered surface, the clad including a layer of the medium having a predetermined refractive index is arranged so as to contact at least one of the first and second principle surfaces of the optical crystal, the terahertz wave amplifying means is structured so as to perform a total reflection on an interfacial surface between the first principle surface and the clad and on an interfacial surface between the second principle surface and the clad, and the predetermined thickness of the optical crystal is set so as to fulfill a phase matching condition of the optical parametric amplification between the excitation light and the terahertz wave propagated within the optical crystal and so as to fulfill a condition where a propagation mode of the terahertz wave is in a single mode,

Furthermore, the optical crystal is a LiNbO₃ crystal; a terahertz wave generating method described in this application includes steps of; outputting an excitation light toward an optical crystal at a predetermined wavelength, generating a terahertz wave by exciting the optical crystal and propagating the inputted excitation light with performing a total reflection within the optical waveguide having the optical crystal as a core, and repeatedly performing an optical parametric amplification for the terahertz wave by use of the excitation light.

Thus, high-intensified terahertz waves are generated by repeatedly performing the optical parametric amplification of the terahertz waves, generated by use of the optical crystal excited by the irradiation with the excitation light, by use of the excitation light propagating with performing the total reflection within the optical waveguide including the optical crystal serving as a core.
A terahertz wave generating apparatus described in this application includes an excitation light source (11) for outputting an excitation light (13) at a predetermined wavelength, an optical crystal (12) being excited by an irradiation with the excitation light (13) in order to generate a terahertz wave (15) and terahertz wave amplifying means for repeatedly performing an optical parametric amplification for the terahertz wave (15) by use of the excitation light (13), wherein the terahertz wave amplifying means includes an optical waveguide having the optical crystal (12) serving as a core and a medium serving as a clad whose refractive index is smaller than a refractive index of the optical crystal (12), and the inputted excitation light (13) is propagated within the optical waveguide with fulfilling a condition for a total reflection.

## Claims

1. A terahertz wave generating apparatus comprising:
an excitation light source (11) for outputting an excitation light (13) at a predetermined wavelength; and
a nonlinear optical crystal (12) configured to be excited by an irradiation with the excitation light (13) in order to generate a terahertz wave (15) by optical parametric generation,
wherein the nonlinear optical crystal (12) is formed in a plate shape body having a predetermined thickness defined between first and second principal surfaces (12a, 12b) formed so as to be parallel to each other, and a tapered surface (12c) as an incident plane for the excitation light (13),
wherein an optical waveguide is configured by the nonlinear optical crystal (12) serving as a core and a surrounding medium (16) serving as a clad whose refractive index is smaller than a refractive index of the optical crystal (12),
wherein the nonlinear optical crystal is arranged so that the excitation light (13) orthogonally enters the optical crystal (12) through the tapered surface (12c), and a predetermined angle (θ) is set between each of the first and second principal surfaces (12a, 12b) and the tapered surface (12c) so that a total reflection condition is fulfilled at the first and second principal surfaces (12a, 12b) of the optical crystal (12) for the excitation light (13) propagating within the optical waveguide, and
wherein the predetermined thickness of the nonlinear optical crystal (12) and the predetermined angle (θ) are set so that the excitation light (13) which is totally reflected at the first and second principal surfaces (12a, 12b) and the terahertz wave (15) repeatedly interact with each other at plural points (S1, S2, ..., Sn),
**characterized in that** the optical crystal (12) is a LiNbO₃ crystal, wherein the excitation light (13) incident on the principal surfaces (12a, 12b) is s-polarized parallel to the optical axis of the LiNbO₃ crystal, and the predetermined thickness is chosen so that the terahertz wave propagates as a single mode. such that the terahertz wave (15) is generated on a straight line within the nonlinear optical crystal (12) along the waveguide axis, and
the plural points (S1, S2, ..., Sn) are on the straight line, and a phase matching condition of optical parametric amplification between the excitation light (13) and the terahertz wave (15) is fulfilled at the plural points (S1, S2, ..., Sn).

2. The terahertz wave generating apparatus according to claim 1 , wherein the predetermined angle (θ) is 30°, and a propagation speed of the terahertz wave (15) in the optical crystal (12) is half of a propagation speed of the excitation light (13) in the optical crystal (12).

3. The terahertz wave generating apparatus according to any of claims 1 to 2, wherein an exit surface of the terahertz wave (15), which is a surface (12d) of the optical surface (12) opposite to the tapered surface (12c) is vertical to each of the first and second principal surfaces (12a, 12b).

## Patentansprüche

1. Terahertzwellenerzeugungsvorrichtung mit:
einer Anregungslichtquelle (11) zum Ausgeben eines Anregungslichts (13) mit einer vorbestimmten Wellenlänge; und
einem nichtlinearen optischen Kristall (12), der konfiguriert ist, durch eine Bestrahlung mit dem Anregungslicht (13) angeregt zu werden, um eine Terahertzwelle (15) durch eine optische parametrische Erzeugung zu erzeugen,
wobei der nichtlineare optische Kristall (12) als ein plattenförmiger Körper mit einer vorbestimmten Dicke, die zwischen ersten und zweiten Hauptflächen (12a, 12b) definiert ist, die so gebildet sind, dass sie parallel zueinander sind, und einer abgeschrägten Fläche (12c) als einer Einfallsebene für das Anregungslicht (13) gebildet ist,
wobei ein optischer Wellenleiter durch den nichtlinearen optischen Kristall (12), der als ein Kern dient, und ein umgebendes Medium (16) konfiguriert ist, das als eine Umhüllung dient, dessen Brechungsindex kleiner als ein Brechungsindex des optischen Kristalls (12) ist,
wobei der nichtlineare optische Kristall so angebracht ist, dass das Anregungslicht (13) orthogonal in den optischen Kristall (12) durch die abgeschrägte Fläche (12c) eintritt, und ein vorbestimmter Winkel (θ) zwischen jeder der ersten und zweiten Hauptflächen (12a, 12b) und der abgeschrägten Fläche (12c) eingestellt ist, so dass eine Totalreflexionsbedingung an den ersten und zweiten Hauptflächen (12a, 12b) des optischen Kristalls (12) für das Anregungslicht (13) erfüllt ist, das sich durch den optischen Wellenleiter ausbreitet, und
wobei die vorbestimmte Dicke des nichtlinearen optischen Kristalls (12) und der vorbestimmte Winkel (θ) so eingestellt sind, dass das Anregungslicht (13), das an den ersten und zweiten Hauptflächen (12a, 12b) total reflektiert wird, und die Terahertzwelle (15) wiederholt miteinander an mehreren Punkten (S1, S2, ..., Sn) interagieren,
**gekennzeichnet dadurch, dass**
der optische Kristall (12) ein LiNbO₃-Kristall ist,
wobei das auf die Hauptflächen (12a, 12b) einfallende Anregungslicht (13) s-polarisiert parallel zu der optischen Achse des LiNbO₃-Kristalls ist, und die vorbestimmte Dicke so gewählt ist, dass die Terahertzwelle als eine einzelne Mode propagiert,
so dass die Terahertzwelle (15) auf der geraden Linie in dem nichtlinearen optischen Kristall (12) entlang der Wellenleiterachse erzeugt wird, und
die mehreren Punkte (S1, S2, ..., Sn) auf einer geraden Linie sind, und eine Phasenanpassungsbedingung einer optischen parametrischen Verstärkung zwischen dem Anregungslicht (13) und der Terahertzwelle (15) an den mehreren Punkten (S1, S2, ..., Sn) erfüllt ist.

2. Terahertzwellenerzeugungsvorrichtung nach Anspruch 1, wobei der vorbestimmte Winkel (θ) 30° ist, und eine Ausbreitungsgeschwindigkeit der Terahertzwelle (15) in dem optischen Kristall (12) die Hälfte einer Ausbreitungsgeschwindigkeit des Anregungslichts (13) in dem optischen Kristall (12) ist.

3. Terahertzwellenerzeugungsvorrichtung nach einem der Ansprüche 1 bis 2, wobei eine Austrittsfläche der Terahertzwelle (15), die eine Fläche (12d) der optischen Fläche (12) gegenüber der abgeschrägten Fläche (12c) ist, senkrecht zu jeder der ersten und zweiten Hauptflächen (12a, 12b) ist.

## Revendications

1. Appareil de génération d'onde dans la bande de fréquence tétrahertz comprenant :
une source de lumière d'excitation (11) destinée à délivrer en sortie une lumière d'excitation (13) à une longueur d'onde prédéterminée ; et
un cristal optique non linéaire (12) configuré pour être excité en l'irradiant avec la lumière d'excitation (13) en vue de générer une onde tétrahertz (15) par génération paramétrique optique ;
dans lequel le cristal optique non linéaire (12) a la forme d'un corps plat d'une épaisseur prédéterminée définit entre des première et deuxième surfaces principales (12a, 12b) formées de manière à être parallèles entre elles, et une surface effilée (12c) faisant office de plan d'incidence de la lumière d'excitation (13),
dans lequel un guide d'onde optique est configuré par le cristal optique non linéaire (12) faisant office de noyau et un milieu environnant (16) faisant office de gaine dont l'indice de réfraction est plus petit qu'un indice de réfraction du cristal optique (12),
dans lequel le cristal optique non linéaire est agencé de sorte que la lumière d'excitation (13) rentre de faon orthogonale dans le cristal optique (12) à travers la surface effilée (12c), et un angle prédéterminé (θ) est réglé entre chacune des première et deuxième surfaces principales (12a, 12b) et la surface effilée (12c) de sorte qu'une condition de réflexion totale soit remplie au niveau des première et deuxième surfaces principales (12a, 12b) du cristal optique (12) pour la lumière d'excitation (13) se propageant dans le guide d'onde optique, et
dans lequel l'épaisseur prédéterminée du cristal optique non linéaire (12) et l'angle prédéterminé (θ) sont réglés de sorte que la lumière d'excitation (13) qui est totalement réfléchie au niveau des première et deuxième surfaces principales (12a, 12b) et l'onde tétrahertz (15) interagissent de façon répétée entre elles en plusieurs points (S1, S2, ..., Sn),
**caractérisé en ce que** le cristal optique (12) est un cristal LiNbO₃, dans lequel la lumière d'excitation (13) incidente sur les surfaces principales (12a, 12b) est s-polarisée parallèlement à l'axe optique du cristal LiNbO₃, et l'épaisseur prédéterminée est choisie pour que l'onde tétrahertz se propage comme un mode unique, de sorte que l'onde tétrahertz (15) soit générée en une ligne droite dans le cristal optique non linéaire (12) le long de l'axe du guide d'onde, et
les plusieurs points (S1, S2, ..., Sn) sont sur la ligne droite, et une condition d'adaptation de phase d'amplification paramétrique optique entre la lumière d'excitation (13) et l'onde tétrahertz (15) soit remplie au niveau des plusieurs points (S1, S2, ..., Sn).

2. Appareil de génération d'onde tétrahertz selon la revendication 1, dans lequel l'angle prédéterminé (θ) est de 30°, et une vitesse de propagation de l'onde tétrahertz (15) dans le cristal optique (12) est la moitié d'une vitesse de propagation de la lumière d'excitation (13) dans le cristal optique (12).

3. Appareil de génération d'onde tétrahertz selon l'une quelconque des revendications 1 à 2, dans lequel une surface de sortie de l'onde tétrahertz (15), qui est une surface (12d) de la surface optique (12) en regard de la surface effilée (12c) est verticale à chacune des première et deuxième surfaces principales (12a, 12b).
